(19) Europäisches Patentamt / European Patent Office / Office européen des brevets

(11) **EP 3 789 461 B1**

(12) **EUROPÄISCHE PATENTSCHRIFT**

(45) Veröffentlichungstag und Bekanntmachung des Hinweises auf die Patenterteilung:
**07.01.2026 Patentblatt 2026/02**

(21) Anmeldenummer: **19195801.6**

(22) Anmeldetag: **06.09.2019**

(51) Internationale Patentklassifikation (IPC):
*C09D 5/00* (2006.01)    *C08J 9/00* (2006.01)
*C09D 7/65* (2018.01)    *C08J 9/32* (2006.01)
*C09K 3/10* (2006.01)    *C08J 9/12* (2006.01)
*B60R 13/08* (2006.01)    *C09D 121/00* (2006.01)
*C09D 133/00* (2006.01)    *C09D 163/00* (2006.01)
*C09D 7/40* (2018.01)

(52) Gemeinsame Patentklassifikation (CPC):
(C-Sets verfügbar)
**C08J 9/0061; C08J 9/0066; C08J 9/32; C09D 5/00;
C09D 7/65; C09D 7/70; C09D 133/00;** B60R 13/08;
C08J 2203/22; C08J 2333/04; C08J 2401/02;
C08J 2403/02; C08K 7/22          (Forts.)

(54) **THERMISCH EXPANDIERBARE ZUBEREITUNG**

THERMALLY EXPANDABLE COMPOSITION

PRÉPARATION THERMIQUEMENT EXPANSIBLE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**10.03.2021 Patentblatt 2021/10**

(73) Patentinhaber: **Henkel AG & Co. KGaA
40589 Düsseldorf (DE)**

(72) Erfinder:
• **Sauer, Ralf
68789 St. Leon-Rot (DE)**
• **Klotz, Michael
68353 Edingen-Neckarhausen (DE)**
• **Cappel, Fiona
69207 Sandhausen (DE)**

(56) Entgegenhaltungen:
EP-A1- 2 090 621          EP-A1- 3 147 323
WO-A1-2016/072888          CN-A- 109 553 371
US-A1- 2004 211 934          US-A1- 2006 135 635

(52) Gemeinsame Patentklassifikation (CPC): (Forts.)

C-Sets
**C09D 133/00, C08L 3/02**

**Beschreibung**

Die vorliegende Anmeldung betrifft eine thermisch expandierbare Zubereitung, die die hierin offenbarten Bestandteile enthält, ein Verfahren zum Schalldämpfen von Bauteilen mit insbesondere dünnwandigen Strukturen mit derartigen Zubereitungen sowie die Verwendung dieser Zubereitungen zum Schalldämpfen von derartigen Strukturen.

Im heutigen Fahrzeugbau (PKW / LKW / Bus / Zug) werden Anbauteile, Beplankungen, aber auch beispielsweise der Dachbereich und der Fahrzeugboden mit akustisch dämpfenden Massen ausgerüstet, um die verschiedenen Schwingungen der Struktur und damit die Geräuschübertragungen im Anwendungsbereich von -40 bis +90 °C zu mindern bzw. zu verhindern. Diese Dämpfungsmassen sind vielfach auf Basis von Bitumen in Form von Matten im Markt, die speziell auf jede Fahrzeuggeometrie zugeschnitten werden müssen. Spritzbare und extrudierbare Dämpfungsmassen auf Basis von Kautschuk, Epoxy und wässrigen (Acrylat-) Dispersionen sind ebenfalls bekannt. Alle diese Dämpfungsmassen werden flächig hauptsächlich im Rohbau oder im Lackbereich auf das Fahrzeug aufgebracht.

Insbesondere werden zum Schalldämmen bzw. Schalldampfen wasserbasierte Systeme eingesetzt. Allerdings enthalten diese Systeme Wasser, welches nach der Auftragung und beim Erhitzen entweicht. Insbesondere in der Automobilindustrie kommen die Zubereitungen nach dem Auftrag z.B. zusammen mit den Automobilkarosserie in den Ofen. Bei der Erwärmung, typischer Weise mit einem Temperaturanstieg von 10 °C/min, und dem Einbrennen, typischerweise bei Temperaturen zwischen 100 und 200 °C für 30 Minuten, entweicht das Wasser unkontrolliert, was zu seiner Blasenbildung führt, wodurch eine unebene und Oberfläche entsteht. Zur Unterdrückung der Blasenbildung enthalten entsprechende wasserbasierte Systeme häufig einen sehr geringen Anteil an Treibmittel, wodurch geringe Expansionsraten von bis zu 40 Vol.-% erreicht werden. Oder aber die Zubereitung enthalten eine große Menge an zusätzlichen Stabilisatoren, die häufig zu einer größeren Wasseraufnahme der resultierenden Schäume führt.

US 2004/211934 A1 beschreibt wasserbasierte Beschichtungszusammensetzungen, die ein dispergiertes Polymer, einen anorganischen Füllstoff und expandierbare Mikrosphären enthalten. In der EP 3 147 323 A1 werden thermisch expandierbare Zusammensetzungen offenbart, die mindestens ein peroxidisch vernetzendes Polymer, mindestens ein Peroxid und mindestens ein endothermes chemisches Treibmittel enthalten. Diese Zusammensetzung dient zum Abdichten und Füllen von Hohlräumen in Bauteilen, zum Verstärken oder Versteifen von Bauteilen und zum Verkleben von beweglichen Bauteilen.

Dementsprechend war es die Aufgabe der vorliegenden Erfindung, Zubereitungen zur Herstellung von Schäumen, insbesondere zum Schalldämmen zur Verfügung zu stellen, die die oben genannten Nachteile überwinden. Insbesondere soll bei der Herstellung eine verringerte Blasenbildung auftreten.

Zudem ist es in der heutigen Zeit der Automatisierung der Herstellprozesse durch den Einsatz von Robotern wünschenswert, wenn die Komponenten zum Schalldämpfen direkt durch einen Roboter appliziert werden könnten. Dies spart Zeit und Kosten und kann zudem kann durch eine Umprogrammierung des Roboters der Herstellungsprozess schnell an andere Bauteile und Geometrien angepasst werden. Hierzu ist es aber vor allem wünschenswert, wenn sich der zum Schalldämpfen geeignete Stoff direkt vom Roboter aufgetragen werden kann.

Überraschenderweise wurde nunmehr gefunden, dass thermisch expandierbare Zubereitungen, die die hierin beschriebene Kombination von Komponenten enthalten, ein derartiges Verhalten zeigen. Insbesondere die Kombination von zwei Stärken und einem physikalischen Treibmittel in den wässrigen Zubereitungen gewährleistet, dass eine Blasenbildung nahezu gänzlich unterdrückt werden kann. Die resultierenden Produkte weisen dabei eine sehr glatte und ebene Oberfläche auch, wobei zusätzlich eine gute Schall-Dämpfung erreicht werden kann. Zudem lassen sich entsprechende Zubereitungen pumpbar ausgestallten, weshalb ein Auftrag mittels Robotern möglich ist

Ein Gegenstand der vorliegenden Erfindung sind daher thermisch expandierbare Zubereitungen, enthaltend

    (a) mindestens ein Bindemittel;
    (b) mindestens ein physikalisches Treibmittel;
    (c) mindestens zwei Polysaccharide und
    (d) Wasser,

wobei als Bindemittel mindestens ein (Meth)acrylat-basiertes Polymer enthalten ist und das Wasser in einer Menge von 1 bis 30 Gew, bezogen auf die Gesamtmasse der thermisch expandierbaren Zubereitung, enthalten ist..

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polymer" bedeutet somit beispielsweise mindestens eine Art von Polymer, d.h. dass eine Art von Polymer oder eine Mischung mehrerer verschiedener Polymere gemeint sein kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Sofern hierin auf Molekulargewichte von polymeren Verbindungen Bezug genommen wird, beziehen sich die Angaben auf das zahlenmittlere Molekulargewicht Mn, sofern nicht anders angegeben. Das Molekulargewicht, zahlenmittleres als auch gewichtsmittleres, kann mittels GPC gegen einen Polystyrolstandard bestimmt werden.

Alle Prozentangaben, die im Zusammenhang mit den hierin beschriebenen Zubereitungen gemacht werden, beziehen sich, sofern nicht explizit anders angegeben auf Gew.-%, jeweils bezogen auf die betreffende Zubereitung oder Zusammensetzung.

Der Ausdrücke "ungefähr" oder "etwa", in Zusammenhang mit einem Zahlenwert, bezieht sich auf eine Varianz von $\pm 10\%$ bezogen auf den angegebenen Zahlenwert.

Die im vorliegenden Text angegebenen Molekulargewichte beziehen sich, soweit nicht anders angegeben, auf das Gewichtsmittel des Molekulargewichts (Mw). Das Molekulargewicht Mw kann durch Gelpermeationschromatographie (GPC) mit Polystyrol als Standard und THF als Eluent bestimmt werden. Falls nicht anders angegeben, sind die aufgeführten Molekulargewichte solche, die mittels GPC bestimmt wurden. Das Zahlenmittel des Molekulargewichts Mn kann ebenfalls mittels GPC, wie oben angegeben, bestimmt werden.

"Fest" ist ein Stoff dann, wenn er bei 20°C und 1013 mbar im festen Aggregatzustand vorliegt. In einem festen Aggregatzustand liegt der Stoff vor, wenn sich die Geometrie des Stoffes bei den angegebenen Bedingungen innerhalb von 1 Stunde, insbesondere innerhalb von 24 Stunden, nicht unter dem Einfluss der Schwerkraft verformt. "Flüssig" bedeutet im Rahmen der Erfindung, dass die entsprechende Verbindung/Komponente, bei Standardbedingungen, d.h. 20 °C und 1013 mbar, nicht in fester Form vorliegt. Somit sind auch pastöse Stoffe im Rahmen dieser Erfindung flüssig. Bevorzugt ist ein flüssiger Stoff bei Standardbedingungen fließfähig und kann damit beispielsweise aus einem Behälter ausgeschüttet werden. Vorzugsweise hat ein flüssiger Stoff eine Viskosität von bis 250 Pa*s bei 20°C. Soweit nicht anders vermerkt werden die Viskositäten im Rahmen der vorliegenden Anmeldung unter den folgenden Messbedingungen bestimmt: Rotationsrheometer mit Platte-Platte-Geometrie (PP20), gemessen in Oszillation bei 10% Deformation und einer Frequenz von 100 rad/s, Schichtdicke des Materials 0,2mm.

Die thermisch expandierbaren Zubereitungen enthalten mindestens ein Bindemittel, wobei als Bindemittel mindestens ein (Meth)acrylat-basiertes Polymer enthalten ist. In einen anderen ausführungsform kann die thermisch expandierbaren Zubereitung als Bindemittel auch ein Bindemittelsystem enthalten. Im Falle eines Bindemittelsystem enthalten die Zubereitungen vorzugsweise mindestens ein Bindemittel und mindestens einen Härter und/oder Beschleuniger, insbesondere einen thermisch aktivierbaren Härter.

Vorzugsweise liegt der Härter und/oder Beschleuniger allgemein in einer Menge von insgesamt mindestens 0,25 Gew.-% und insbesondere von mindestens 1,5 Gew.-% bezogen auf die Gesamtzusammensetzung vor. Mehr als insgesamt 15 Gew.-% bezogen auf die Gesamtmasse der Zusammensetzung sind jedoch in der Regel nicht erforderlich. Allerdings kann der Anteil des Härters und/oder Beschleunigers stark variieren in Abhängigkeit vom verwendeten System.

Vorzugsweise wird der Härter so ausgewählt, dass der Härter ein thermisch aktivierbarer Härter ist, so dass die Vernetzungstemperatur T90 des Systems bevorzugt oberhalb 70 °C, insbesondere oberhalb von 100 °C liegt. Die Vernetzungstemperatur T90 definiert sich als die Temperatur, bei der eine 90%ige Vernetzung des Materials innerhalb von 12 Minuten erreicht wird. Die Vernetzungstemperatur T90 und der Vernetzungsgrad können mittels einer Rheometermessung bestimmt werden, wie mit einem Monsanto-Rheometer 100 S (Prinzip oszillierende Scheibe bei einem Auslenkwinkel von 3°, ca. 15 cm3 Kammervolumen) nach DIN 53529.

Der Anteil des Bindemittels an der Gesamtzusammensetzung kann allgemein im Bereich von 2 bis 65 Gew.-% liegen. Allerdings kann der Anteil des Bindemittels stark variieren in Abhängigkeit vom verwendeten Bindemittel. Bevorzugte Bindemittel der Zusammensetzungen sind ausgewählt aus der Gruppe von Epoxiden, thermoplastischen Elastomeren, peroxidisch vernetzbaren Polymeren oder (Meth)acrylat-basierten Polymeren.

Ein bevorzugter Gegenstand enthält daher als weiteres Bindemittel Epoxide. Als Epoxidharze eignen sich eine Vielzahl von Polyepoxiden, die mindestens 2 1,2- Epoxygruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schliessen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxyphenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Als thermisch aktivierbare oder latente Härter für das Epoxidharz-Bindemittelsystem aus den genannten Komponenten können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter stöchiometrisch mit in die Härtungsreaktion einbezogen sein. Sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Für einkomponentige, hitzehärtende Formkörper ist das Auswahlkriterium die niedrige Löslichkeit dieser Stoffe bei Raumtemperatur in dem Harzsystem, so dass hier feste, feinvermahlene Härter den Vorzug haben. Insbesondere ist Dicyandiamid geeignet. Damit ist eine gute Lagerstabilität der hitzehärtbaren Formkörper gewährleistet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Diese haben jedoch vielfach eine zu hohe Löslichkeit in dem Klebstoffsystem, so dass hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C1-12-Alkylimidazole oder N-Arylimidazole. Besonders bevorzugt ist der Einsatz einer Kombination aus Härter und Beschleuniger in Form von sog. beschleunigten Dicyandiamiden in feinvermahlener Form. Dadurch erübrigt sich der separate Zusatz von katalytisch wirksamen Beschleunigern zu dem Epoxid-Härtungssystem.

In einer weiteren bevorzugten Ausführungsform enthält die mindestens ein thermoplastisches Elastomer als weiteres Bindemittel, vorzugsweise ein Styrol / Butadien oder Styrol / Isopren-Blockcopolymer. Bevorzugt wird ein thermoplastisches Elastomer eingesetzt, dessen Erweichungspunkt nicht höher als die Temperatur liegt, bei der das Treibmittel beginnt, aktiviert zu werden, vorzugsweise liegt der Erweichungspunkt mindestens etwa 30 °C niedriger als die Aktivierungstemperatur des Treibmittels. Der Erweichungspunkt wird mittels DSC bestimmt.

Das thermoplastische Elastomer wird vorzugsweise ausgewählt aus der Gruppe bestehend aus thermoplastischen Polyurethanen (TPU) und Block-Copolymere (einschließlich linearer als auch radialer Blockcopolymere) der A-B-, A-B-A-, A-(B-A)n-B- und (A-B)n-Y-Typen, wobei A ein aromatischer Polyvinyl-("hard")-Block ist und der B-Block einen gummiartigen ("soft")-Block aus Polybutadien, Polyisopren oder dergleichen ist, der teilweise hydrogeniert sein kann oder vollständig hydriert ist, Y eine polyfunktionelle Verbindung ist und n eine ganze Zahl von mindestens 3 ist. Die Hydrierung des B-Blocks entfernt ursprünglich vorhandenen Doppelbindungen und erhöht die thermische Stabilität des Blockcopolymers. Vorzugsweise liegt jedoch keine Hydrierung vor.

Geeignete Block-Copolymere umfassen, sind aber nicht beschränkt auf, SBS (Styrol / Butadien / Styrol)-Copolymere, SIS (Styrol / Isopren / Styrol)-Copolymere, SEPS (Styrol / Ethylen / Propylen / Styrol)-Copolymere, SEEPS (Styrol / Ethylen / Ethylen / Propylen / Styrol) oder SEBS (Styrol / Ethylen / Butadien / Styrol)-Copolymere. Besonders geeignete Blockcopolymere sind Styrol / Isopren / Styrol-Triblock-Polymere, als auch ganz oder teilweise hydrierten Derivaten davon, wobei der Polyisopren-Block vorzugsweise einen relativ hohen Anteil von Monomereinheiten, abgeleitet von Isopren mit einer 1,2 und / oder 3,4 Konfiguration enthält.

Vorzugsweise sind mindestens etwa 50% der polymerisierten Isopren-Monomer-Einheiten in einer 1,2 und / oder 3,4-Konfiguration einpolymerisiert, wobei der Rest der Isopren-Einheiten eine 1,4-Konfiguration aufweisen. Solche Block-Copolymere sind zum Beispiel erhältlich von Kuraray Co., Ltd unter dem Handelsnamen HYBRAR.

In bestimmten bevorzugten Ausführungsformen der Erfindung haben die "harten" Blöcke einen Gewichtsanteil von etwa 15 bis etwa 30 Gew.-% des Blockcopolymers und die "weichen" Blöcke einen von etwa 70 bis etwa 85 Gew.-% des Blockcopolymers.

Die Glasübergangstemperatur der "weichen" Blöcken liegt vorzugsweise bei etwa -80 ° C bis etwa 10 ° C, während die Glasübergangstemperatur von den "harten" Blöcken vorzugsweise bei etwa 90 ° C bis etwa 110 ° C liegt. Der Schmelzflußindex des Blockcopolymers beträgt vorzugsweise etwa 0,5 bis etwa 6 g/10 min (gemessen nach ASTM D1238, 190 ° C, 2,16 kg). Bevorzugt weist das Block-Copolymer ein zahlenmittleres Molekulargewicht von etwa 30.000 bis etwa 300.000, gemessen mittels GPC gegen einen Polystyrol-Standard.

Als thermoplastische Elastomere können auch thermoplatische Polyurethane (TPU) eingesetzt werden, als auch andere Blockcopolymere, die harte und weiche Segmente enthalten, wie beispielsweise Polystyrol/Polydimethylsiloxan-Blockcopolymere, Polysulfon/Polydimethylsiloxan-Blockcopolymere, Polyester / Polyether-Blockcopolymere (z. B. Copolyester wie die aus Dimethylterephthalat, Poly(tetramethylenoxid)glykol und Tetramethylenglykol), Polycarbonat/Polydimethylsiloxan-Blockcopolymere und Polycarbonat/Polyether-Blockcopolymere.

Thermoplastische Elastomere, die nicht Blockcopolymere sind, sind in der Regel fein interdispergiert Mehrphasensysteme oder Legierungen und können ebenfalls verwendet werden, einschließlich Mischungen von Polypropylen mit Ethylen-Propylen-Kautschuke (EPR) oder Ethylen-Propylen-Dien-Monomer (EPDM)-Kautschuke.

In dieser Ausführungsform mit einem oder mehreren thermoplastischen Elastomeren enthält das expandierbare Material vorzugsweise ein oder mehrere nicht-elastomere Thermoplasten. Dabei wird der nicht-elastomere Thermoplast unter anderem ausgewählt, um die Hafteigenschaften und Verarbeitbarkeit der expandierbaren Zusammensetzung zu verbessern.

Im Allgemeinen wird es wünschenswert sein, einen nicht-elastomeren Thermoplasten einzusetzen, dessen Erweichungspunkt nicht höher als die Temperatur liegt, bei der das Treibmittel beginnt, aktiviert zu werden, vorzugsweise mindestens etwa 30 ° C niedriger als diese Temperatur.

Zu dem besonders bevorzugten nicht-elastomeren Thermoplasten gehören Olefinpolymere, insbesondere Copolymere von Olefinen (z. B. Ethylen) mit nicht-olefinischen Monomeren (z. B. Vinylester, wie Vinylacetat und Vinylpropionat, (Meth)acrylatester, wie C1 bis C6-Alkylester von Acrylsäure und Methacrylsäure). Ethylen / Vinylacetat-Copolymere (speziell Copolymere mit einen Anteil von etwa 16 bis etwa 35 Gew.-% Vinylacetat) und Ethylen / Methylacrylat-Copolymere (insbesondere Copolymere mit einem Anteil von etwa 15 bis etwa 35 Gew.-% Methylacrylat).

In bestimmten Ausgestaltungen dieser Ausführungsform beträgt das Gewichtsverhältnis von thermoplastischem Elastomer zu nicht-elastomeren Thermoplast mindestens 0,5:1 oder zumindest 1:1 und / oder nicht mehr als 5:1 oder 2,5:1.

Ein weiterer bevorzugter Gegenstand der Erfindung enthält als weiteres Bindemittel mindestens ein peroxidisch vernetzbares Polymer, vorzugsweise in Verbindung mit mindestens einem Peroxid als Härter.

Als peroxidisch vernetzbare Polymere kommen prinzipiell alle thermoplastischen Polymere und thermoplastischen Elastomere in Frage, die sich peroxidisch vernetzen lassen. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

In einer bevorzugten Ausführungsform ist das mindestens eine peroxidisch vernetzbare Polymer ausgewählt aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, Ethylen-Acrylester-Copolymeren und Polyolefinen, wie beispielsweise Polyethylen oder Polypropylen.

Unter einem funktionalisierten Copolymeren wird dabei erfindungsgemäß ein Copolymer verstanden, das mit zusätzlichen Hydroxidgruppen, Carboxygruppen, Anhydridgruppen, Acrylatgruppen und/oder Glycidylmethacrylat-Gruppen versehen ist.

Besonders vorteilhaft im Sinne der vorliegenden Erfindung sind Ethylen-Vinylacteat-Copolymere, funktionalisierte Ethylen-Vinylacetat-Copolymere, funktionalisierte Ethylen-Butylacrylat-Copolymere, Ethylen-Propylen-Dien-Copolymere, Styrol-Butadien-Blockcopolymere, Styrol-Isopren-Blockcopolymere, Ethylen-Methylacrylat-Copolymere, Ethylen-Ethylacrylat-Copolymere, Ethylen-Butylacrylat-Copolymere und Ethylen-(Meth)acrylsäure-Copolymere.

Besonders gute Haftungseigenschaften insbesondere auf geöltem Blech können erzielt werden, wenn erfindungsgemäße thermisch härtbare Zubereitungen eingesetzt werden, die ein oder mehrere Ethylen-Vinylacetat-Copolymere als alleinige peroxidisch härtbare Polymere enthalten, das heißt, dass die thermisch härtbaren Zubereitungen außer den Ethylen-Vinylacetat-Copolymeren im Wesentlichen frei sind von weiteren peroxidisch härtbaren Polymeren.

Thermisch expandierbare Zubereitungen sind erfindungsgemäß "im Wesentlichen frei von weiteren peroxidisch härtbaren Polymeren", wenn sie weniger als 3 Gew.-%, vorzugsweise weniger als 1,5 Gew.-%, ganz besonders bevorzugt weniger als 0,5 Gew.-% eines peroxidisch vernetzbaren Polymeren enthalten, das kein Ethylen-Vinylacetat-Copolymer ist.

Thermisch expandierbare Zubereitungen, die mindestens ein Ethylen-Vinylacetat-Copolymer mit einem Vinylacetatanteil von 9 bis 30 Gew.-%, insbesondere von 15 bis 20 Gew.-%, ganz besonders von 17,5 bis 19 Gew.-%, bezogen auf die Gesamtmasse des Copolymeren, enthalten, sind erfindungsgemäß besonders bevorzugt.

Die thermisch expandierbaren Zubereitungen enthalten vorzugsweise mindestens 30 Gew.-% mindestens eines peroxidisch vernetzbaren Polymeren. Thermisch expandierbare Zubereitungen, die 40 bis 90 Gew.-%, insbesondere 50 bis 80 Gew.-%, mindestens eines peroxidisch vernetzbaren Polymers jeweils bezogen auf die Gesamtmasse der Zusammensetzung enthalten, sind besonders bevorzugt.

Als weiteren Bestandteil neben den peroxidisch vernetzbaren Polymeren können die thermisch expandierbaren Zubereitungen vorzugsweise mindestens ein niedermolekulares multifunktionelles Acrylat enthalten

Unter einem "niedermolekularen multifunktionellen Acrylat" wird eine Verbindung verstanden, die mindestens zwei Acrylatgruppen aufweist und ein Molgewicht unterhalb von 2400g/mol, vorzugsweise unterhalb von 800g/mol, aufweist. Als vorteilhaft haben sich insbesondere derartige Verbindungen erwiesen, die zwei, drei oder mehr Acrylatgruppen pro Molekül aufweisen.

Bevorzugte difunktionelle Acrylate sind Ethylenglycol-Dimethacrylat, Diethylenglycol-Dimethacrylat, Triethlenglycol-Dimethacrylat, Triethlenglycol-Diacrylat, Tripropyleneglycol-Dimethacrylat, 1,4-Butandiol-Dimethacrylat, 1,3 Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol- Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Di-pentaerythritol-Hexaacrylat, Pentaerythritol-Triacrylat (TMM), Tetramethylolmethan- Tetraacrylat (TMMT), Trimethylolpropan-Triacrylat (TMPTA), Pentaerythritol-Trimethacrylat, Di-(Trimethylolpropan)-Tetraacrylat (TMPA), Pentaerythritol-Tetraacrylat, TrimethylolpropanTrimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitung die ein niedermolekulares multifunktionelles Acrylat ausgewählt aus Triethylenglykoldiacrylat, Triethlenglycol-Dimethacrylat, Trimethylolpropantriacrylat (TMPTA) und Trimethylolpropantrimethacrylat (TMPTMA), Pentaerythritol-Triacrylat (TMM), Tetramethylolmethan- Tetraacrylat (TMMT), Pentaerythritol-Trimethacrylat, Di-(Trimethylolpropan)-Tetraacrylat (TMPA) und Pentaerythritol-Tetraacrylat enthalten, sind erfindungsgemäß ganz besonders bevorzugt.

Neben den niedermolekularen Acrylaten können die thermisch expandierbaren Zubereitungen weitere Covernetzer, wie beispielsweise Allylverbindungen, wie Triallyl-cyanurat, Triallylisocyanurat, Triallyl-trimesat, Triallyl-trimellitat (TATM), Tetraallyl-pyromellitat, den Diallylester von 1,1,3-Trimethyl-5-carboxy-3-(4-carboxyphenyl)inden, Trimethylolpropan-trimellitat (TMPTM) oder Phenylen-dimaleimide enhtalten.

Dabei hat es sich als besonders vorteilhaft erwiesen, wenn die thermisch expandierbaren Zubereitungen mindestens ein niedermolekulares multifunktionelles Acrylat ausgewählt aus Triethylenglykoldiacrylat, Trimethylolpropantriacrylat (TMPTA) und Trimethylolpropantrimethacrylat (TMPTMA) enthalten.

Die niedermolekularen multifunktionellen Acrylate sind in den thermisch expandierbaren Zubereitungen vorzugsweise in einer Menge von 0,2 bis 2,5 Gew.-%, insbesondere von 0,4 bis 1,4 Gew.-%, jeweils bezogen auf die Gesamtmasse der thermisch expandierbaren Zubereitung enthalten.

Als Härtersystem für die peroxidisch vernetzbares Polymere enthalten die thermisch expandierbaren Zubereitungen bevorzugt mindestens ein Peroxid. Insbesondere sind die organischen Peroxide geeignet, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide) und 4,4- Di-tert-butylperoxy-n-butyl-valerate.

Besonders bevorzugt sind die beispielsweise kommerziell von der Firma Akzo Nobel vertriebenen Peroxide, wie 3,3,5,7,7-Pentamethyl-1,2,4-trioxepan, 2,5-Dimethyl-2,5-di(tert-butylperoxy)hex-3-in, Di-tert-butylperoxid, 2,5-Dimethyl-2,5-di(tert-butylperoxy)hexan, tert-Butylcumylperoxid, Di(tert-butylperoxyisopropyl)benzol, Dicumylperoxid, Butyl-4,4-di(tert-butylperoxi)valerat, tert-Butylperoxy-2-ethylhexylcarbonat, 1,1-Di-(tert-butylperoxy)-3,3,5-trimethylcyclohexan, tert-Butylperoxybenzoat, Di-(4-methylbenzoyl)peroxid und Dibenzoylperoxid.

Es hat sich weiterhin als vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es, wenn das eingesetzte Peroxid bei 65°C eine Halbwertszeit von mehr als 60 Minuten aufweist, dass heißt, dass nach einer Erhitzung der thermisch expandierbaren Zubereitung enthaltend das Peroxid auf 65°C für 60 Minuten sich weniger als die Hälfte des eingesetzten Peroxids zersetzt hat. Erfindungsgemäß können solche Peroxide besonders bevorzugt sein, die bei 115°C eine Halbwertszeit von 60 Minuten aufweisen.

Besonders bevorzugt ist mindestens ein Peroxid ausgewählt aus der Gruppe aus Di(tert-butylperoxyisopropyl) benzol, Dicumylperoxid, 1,1-Di-(tert-butylperoxy)-3,3,5-trimethylcyclohexan, Dibenzoylperoxid und Di-tert-butyl- 1,1,4,4-tetramethylbut-2-in-1,4-ylendiperoxid enthalten.

Ferner ist es erfindungsgemäß vorteilhaft, wenn mindestens ein oder die Peroxide in einer auf einen festen inerten Träger, wie beispielsweise Calciumcarbonat und/oder Silica und/oder Kaolin, aufgebrachten Form eingesetzt werden.

Vorzugsweise wird das Peroxid so ausgewählt, dass die Vernetzungstemperatur T90 unterhalt, vorzugsweise 15 - 35 °C unterhalb der Zersetzungstemperatur des endothermen Treibmittels liegt. Dadurch werden eine hohe Gasausbeute und damit eine hohe Expansion des Materials begünstigt. Beispielhafte Ausführungen wären ein Peroxid (T90 = 105 °C) mit Natriumbicarbonat Start-Zersetzungstemperatur 130 °C oder ein Peroxid (T90 = 170 °C) mit Zitronensäure Start-Zersetzungstemperatur 195 °C. Die Vernetzungstemperatur T90 definiert sich als die Temperatur, bei der eine 90%ige Vernetzung des Materials innerhalb von 12 Minuten erreicht wird.

Das mindestens eine oder die Peroxide sind in den erfindungsgemäßen thermisch expandierbaren Zubereitungen vorzugsweise in einer Menge von 0,2 bis 2 Gew.-%, insbesondere in einer Menge von 0,5 bis 1,3 Gew.-%, jeweils bestimmt als Aktivsubstanzgehalt an Peroxid bezogen auf die Gesamtmasse der thermisch expandierbaren Zubereitung, enthalten.

Weiterhin ist es von Vorteil, wenn das Massenverhältnis des mindestens einen Peroxids zu dem mindestens einen niedermolekularen multifunktionellen Acrylat mindestens 1:3 beträgt. Ein Massenverhältnis von mindestens 1:3 ist erfindungsgemäß immer dann erreicht, wenn die Formulierung bezogen auf 1g Peroxid höchstens 3g niedermolekulares multifunktionelles Acrylat enthält. Ein Massenverhältnis von mindestens 1:2,5, insbesondere von mindestens 1:1,6 ist besonders bevorzugt.

Durch die Wahl dieses Massenverhältnisses ist es erfindungsgemäß möglich, dass die Anbindung, das heißt Haftung am gegenüberliegenden Blech, verbessert wird. Es wurde gefunden, dass die erfindungsgemäßen thermisch expandierbaren Zubereitungen insbesondere in Engstellen des abzudichtenden Systems eine bessere Haftung aufweisen, da der Schaum selbst bis in kleinste Ecken und spitze Winkel vordringt und somit eine vollständigere Abdichtung des Systems ermöglicht.

Ein weiterer bevorzugter Gegenstand der vorliegenden Erfindung sind Zusammensetzungen, die als weiteres Bindemittel und Härter

- mindestens eine Triglyceridfraktion, deren Fettsäurenverteilung einen Anteil von mindestens 5Gew.-%, insbesondere von mindestens 60Gew.-%, einer oder mehrerer $\Omega$-3-Fettsäure(n) und/oder einer oder mehrerer $\Omega$-6-Fettsäure(n) aufweist,
- mindestens ein Vulkanisationsmittel ausgewählt aus der Gruppe, bestehend aus

    - Schwefel,
    - peroxidischen Vulkanisationsmitteln,
    - Chinonen und/oder Chinondioximen und/oder
    - Dinitrosobenzolen; und

- optional mindestens ein synthetisches Polymer, das mindestens eine C=C-Doppelbindung und/oder mindestens eine C≡C-Dreifachbindung aufweist, enthalten.

Die mindestens eine Triglyceridfraktion hat eine Fettsäurenverteilung mit einen Anteil von mindestens 5Gew.-%, insbesondere von mindestens 10Gew.-%, ganz besonders bevorzugt von mindestens 60Gew.-%, einer oder mehrerer $\Omega$-3-Fettsäure(n) und/oder einer oder mehrerer $\Omega$-6-Fettsäure(n).

Unter einer "Triglyceridfraktion" wird erfindungsgemäß die Summe aller in der Zubereitung enthaltenen Triglyceride, das heißt der Dreifachester des Glycerins mit drei Fettsäuremolekülen, verstanden. Dabei spielt es zur Bestimmung der Triglyceridfraktion keine Rolle, aus welchem eingesetzten Rohstoff die Triglyceride stammen.

Die Fettsäurenverteilung einer Triglyceridfraktion gibt erfindungsgemäß die Masseanteile der unterschiedlichen Fettsäuren bezogen auf die Gesamtmasse der Fettsäuren in der Triglyceridfraktion an; die unterschiedlichen Anteile werden dabei üblicherweise nach Freisetzung der Fettsäuren als Methylester gaschromatographisch bestimmt. Die Masse des Glycerins geht dementsprechend in diese Berechnung nicht mit ein.

Erfindungsgemäß bevorzugte $\Omega$-3-Fettsäuren sind: Hexadecatriensäure (16:3; ($\omega$-3)), Alpha-Linolensäure (18:3 ($\omega$-3)), Stearidonsäure (18:4; ($\omega$-3)), Eicosatriensäure (20:3; ($\omega$-3)), Eicosatetraensäure (20:4; ($\omega$-3)), Eicosapentaensäure (20:5; ($\omega$-3)), Heneicosapentaensäure (21:5; ($\omega$-3)), Docosapentaensäure (22:5; ($\omega$-3)), Docosahexaensäure (22:6; ($\omega$-3)), Tetracosapentaensäure (24:5; ($\omega$-3)) und Tetracosahexaensäure (24:6; ($\omega$-3)). Ganz besonders bevorzugte $\Omega$-3-Fettsäuren sind Alpha-Linolensäure (18:3 ($\omega$-3)) und Eicosapentaensäure (20:5; ($\omega$-3)). Die Alpha-Linolensäure (18:3 ($\omega$-3)) ist eine ganz besonders bevorzugte $\Omega$-3-Fettsäure.

Erfindungsgemäß bevorzugte $\Omega$-6-Fettsäuren sind: Linolsäure (18:2; ($\omega$-6)), Gamma-Linolensäure (18:3; ($\omega$-6)), Calendulasäure (18:3; (w-6)), Eicosadiensäure (20:2; (w-6)), Dihomogammalinolensäure (20:3; (w-6)),

Arachidonsäure (20:4; (w-6)), Docosadiensäure (22:2; ($\omega$-6)), Docosatetraensäure (22:4; ($\omega$-6)), Docosapentaensäure (22:5; ($\omega$-6)), Tetracosatetraensäure (24:4; ($\omega$-6)) und Tetracosapentaensäure (24:5; ($\omega$-6)).

Besonders bevorzugte $\Omega$-6-Fettsäuren sind Linolsäure (18:2; ($\omega$-6)), Gamma-Linolensäure (18:3; ($\omega$-6)) und Arachidonsäure (20:4; (w-6)), wobei die Linolsäure (18:2 ($\omega$-6)) eine ganz besonders bevorzugte $\Omega$-6-Fettsäure ist.

Besonders gute mechanische Eigenschaften konnten erhalten werden, wenn die Triglyceridfraktion eine Fettsäurenverteilung mit einem Anteil von mindestens 4Gew.-%, insbesondere mindestens 15Gew.-%, einer oder mehrerer $\Omega$-3-Fettsäure(n) aufweist.

Es hat sich als erfindungsgemäß vorteilhaft erwiesen, wenn mindestens 40Gew.-%, insbesondere 60Gew.-%, ganz besonders 100Gew.-% der Triglyceridfraktion bei 25°C flüssig ist, das heißt in Form eines Öles vorliegt.

Weiterhin hat es sich als vorteilhaft erwiesen, wenn die Triglyceridfraktion mit den Anteilen an $\Omega$-3-Fettsäuren und/oder $\Omega$-6-Fettsäuren aus einer natürlichen Quelle, beispielsweise entsprechenden pflanzlichen und/oder tierischen Ölen stammen. Obwohl pflanzliche Öle dabei besonders bevorzugt sind, ist auch ein Einsatz von tierischen Ölen, wie beispielsweise Fischöl oder Lebertranöl mit umfasst.

Erfindungsgemäße Triglyceridfraktionen sind beispielsweise in Sonnenblumenöl, Rapsöl, Sojaöl, Tallöl, Leindotteröl, Tungöl, Leinöl und/oder Hanföl enthalten. Rapsöl, Sojaöl, Tallöl, Leindotteröl, Tungöl, Leinöl und/oder Hanföl sind erfindungsgemäß bevorzugt; Tallöl, Leindotteröl, Tungöl, Leinöl und/oder Hanföl sind erfindungsgemäß besonders bevorzugt; Tungöl, Leinöl und Hanföl sind erfindungsgemäß insbesondere bevorzugt. Der Einsatz von Leinöl ist ganz besonders bevorzugt. Auch der Einsatz einer Kombination aus zwei, drei oder mehreren geeigneten Ölen ist bevorzugt.

Die Triglyceridfraktion, beziehungsweise das die Triglyceridfraktion enthaltende Öl, ist in den erfindungsgemäßen Zusammensetzungen vorzugsweise in einer Menge von 5 bis 50 Gew.-%, insbesondere von 10 bis 40 Gew.-% enthalten.

Als Härter für die Triglyceridfraktion enthalten die Zusammensetzungen vorzugsweise mindestens ein speziell ausgewähltes Vulkanisationssystem ausgewählt aus der Gruppe, bestehend aus:

(b1) Schwefel,
(b2) peroxidischen Vulkanisationssystemen,
(b3) Chinonen und/oder Chinondioximen und/oder
(b4) Dinitrosobenzolen.

In einer ersten bevorzugten Ausführungsform wird als Vulkanisationsmittel synthetischer oder natürlicher Schwefel eingesetzt. Vorzugsweise wird erfindungsgemäß pulverförmiger Schwefel verwendet; es kann aber auch zur Vermeidung von Staubbelastung in der Produktion bevorzugt sein, Schwefel in Abmischung mit einem Staub-bindenden Mittel, beispielsweise vermischt mit Mineralöl, Paraffinöl oder Siliziumdioxid einzusetzen. Dabei kann der Gehalt der Staub-bindenden Öle durchaus so gewählt sein, dass eine Schwefel-haltige Paste als Rohstoff zum Einsatz kommt. Bevorzugt wird Schwefel in der S8-Konfiguration verwendet.

Der Aktivsubstanzgehalt an Schwefel in den erfindungsgemäßen Zubereitungen kann dabei in weiten Grenzen variieren, er kann bis zu 20 Gew.-%, vorzugsweise bis etwa 15 Gew.-%, insbesondere bis zu 10 Gew.-%, jeweils bezogen auf die gesamte Zubereitung, betragen; die Untergrenze sollte vorzugsweise nicht unter 0,5 Gew.-% liegen. Dabei hängt der Gehalt an Schwefel von der Reaktivität des eingesetzten Systems sowie gegebenenfalls dem Einsatz von Polymerisationsadditiven ab.

In einer zweiten bevorzugten Ausführungsform werden radikalische Vulkanisationsmittel, auf der Basis von organischen oder anorganischen Peroxiden, eingesetzt. Beispiele für erfindungsgemäß bevorzugte Peroxide sind Diacetylperoxid, Di-tert.butylperoxid, Dicumylperoxid sowie Dibenzoylperoxid. Die Peroxide sind als Vulkanisationsmittel in den erfindungsgemäßen Zubereitungen in Mengen von 0,2 Gew.-% bis 3 Gew.-% enthalten.

In einer dritten bevorzugten Ausführungsform werden Chinone und/oder Chinondioxime als Vulkanisationsmittel eingesetzt. Ein besonders bevorzugter Vertreter dieser Gruppe ist das p-Benzochinondioxim. Die Chinone und/oder Chinondioxime werden in den Zusammensetzungen vorzugsweise in Konzentrationen von 0,2 Gew.-% bis 5 Gew.-% eingesetzt.

Diese Chinon-basierten Vulkanisationsmittel werden bevorzugt phlegmatisiert in Pastenform, beispielsweise in Abmischung wie Mineralölen, verwendet, wobei der Aktivsubstanzgehalt üblicherweise von 40 Gew.-% und 70 Gew.-% beträgt.

Schwefel ist ein ganz besonders bevorzugtes Vulkanisationsmittel als Härter für die Triglyceridfraktion.

In einer vierten bevorzugten Ausführungsform werde Dinitrosobenzole, insbesondere das 1,4-Dinitrosobenzol, als Vulkanisationsmittel verwendet. Diese Stoffgruppe wird vorzugsweise in den erfindungsgemäßen Zubereitungen in einer Konzentration von 0,2 Gew.-% bis 5 Gew.-%, jeweils bezogen auf die gesamte heiß-härtbare Zubereitung, eingesetzt.

Dabei hat es sich unabhängig von der speziellen Ausführungsform als besonders vorteilhaft erwiesen, wenn das Vulkanisationsmittel in Kombination mit organischen Härtungsbeschleuniger, wie beispielsweise Mercaptobenzothiazol, Dithiocarbamaten, Sulfenamiden, Disulfiden wie beispielsweise Dibenzothiazoldisulfid und/oder Thiuramdisulfiden, Aldehyd-Amin-Beschleunigern, Guanidinen, und/oder Metalloxiden, wie beispielsweise Zinkoxid, eingesetzt wird. Zusätzlich können typische Kautschukvulkanisationshilfsmittel wie beispielsweise Fettsäuren (beispielsweise Stearinsäure) in der Formulierung vorhanden sein.

Der Gehalt an organischem Härtungsbeschleuniger kann vorzugsweise zwischen 0 und etwa 10 Gew.-% variieren. Auch der Gehalt an Metalloxiden liegt vorzugsweise im Bereich zwischen 0 und 10 Gew.-%.

Weiterhin hat es sich als vorteilhaft erwiesen, wenn die heiß-härtbaren Zubereitungen zusätzlich zu der ungesättigten Triglyceridfraktion weiterhin mindestens ein synthetisches Polymer enthalten, das mindestens eine C=C-Doppelbindung und/oder mindestens eine C≡C-Dreifachbindung aufweist. Diese Polymere sind vorzugsweise aus der folgenden Gruppe der Homo- und/oder Copolymeren ausgewählt:

- Polybutadiene, insbesondere die 1,4- und 1,2-Polybutadiene,
- Polybutene,
- Polyisobutylene,
- 1,4-Polyisoprene,
- Styrol-Butadien-Copolymere und
- Butadienacrylnitril-Copolymere,

wobei diese Polymeren endständige und/oder (statistisch verteilte) seitenständige funktionelle Gruppen haben können. Beispiele für derartige funktionelle Gruppen sind Hydroxy-, Carboxyl-, Carbonsäure-anhydrid- oder Epoxygruppen, insbesondere Maleinsäureanhydridgruppen. Diese Polymere können insbesondere aus den oben genannten Polyene ausgewählt werden und in den gleichen Mengen vorliegen.

Die expandierbaren Zubereitungen enthalten als Bindemittel mindestens ein (Meth)acrylat-basiertes Polymer. Entsprechende Polymere bzw. Copolymere basieren auf (Meth)acrylsäure beziehungsweise (Meth)acrylatester, wie C1 bis C6-Alkylester von Acrylsäure und Methacrylsäure, enthalten diese insbesondere zu ≥ 50 Gew.-%, vorzugsweise zu ≥ 80 Gew.-%, insbesondere zu ≥ 95 Gew.-%. Besonders bevorzugt enthalten die expandierbaren Zubereitungen als Bindemittel mindestens ein (Meth)acrylat Polymer, welches nur aus (Meth)acrylatsäure-Einheiten bzw. (Meth)acrylatester-Einheiten aufgebaut, insbesondere (Meth)acrylatester-Einheiten. Entsprechende Polymere können zudem auch noch über die Estergruppe oder durch einpolymerisierte Monomere funktionalisiert sein.

Bevorzugte Monomere, aus denen das (Meth)acrylat-basiertes Polymer aufgebaut ist, umfassen beispielsweise Methylacrylat, Ethylacrylat, Butylacrylat, 2-Ethylhexylacrylat, Decylacrylat, Laurylacrylat, Methylmethacrylat, Butylmethacrylat, Isodecylmethacrylat, Laurylmethacrylat, Hydroxyethyl(meth)acrylat und Hydroxypropyl(meth)acrylat. Zudem können die Polymere, vorzugsweise zu geringen Anteilen (< 5 Gew-%), zusätzliche Monomere mit einer ungesättigten Gruppe einpolymerisiert enthalten, wie (Meth)acrylamid, (Meth)acrylnitril, Styrol, substituierte Styrole, Butadien, Vinylacetat, Vinylbutyrat und andere Vinylester und Vinylmonomere, wie Ethylen, Vinylchlorid, Vinylidenchlorid, enthalten. Vorzugsweise ist das (Meth)acrylat-basiertes Polymer jedoch im Wesentlichen frei von zusätzlichen Monomeren mit einer ungesättigten Gruppe. Die Verwendung des Begriffs "(Meth)", gefolgt von einem anderen Bergriff wie Acrylat oder Acrylamid, wie in der gesamten Offenbarung verwendet, bezieht sich sowohl auf Acrylate oder Acrylamide als auch Methacrylate bzw. Methacrylamide.

Besonders bevorzugt enthalten die thermisch expandierbaren Zubereitungen als Bindemittel ein Methyl(meth) acrylat oder ein Butyl(meth)acrylat.

Die Glasübergangstemperatur ("Tg") des (Meth)acrylat-basierten Polymers beträgt vorzugsweise - -30°C bis 50°C, stärker bevorzugt -10°C bis 20°C. Der Tg-Wert lässt sich mittels Differentialscanningkalorimetrie (DSC) unter Messung des Mittelpunkts des Wärmeflusses gegen den Temperaturübergang bestimmen. Dabei kann durch die Auswahl der Monomere und der Mengen der Monomere der gewünschte Polymer-Tg-Bereich eingestellt werden.

Besonders vorteilhaft ist, wenn die erfindungsgemäßen thermisch expandierbaren Zubereitungen als Bindemittel das mindestens eine (Meth)acrylat-basierte Polymer in einer Menge von 3 bis 30 Gew.-%, insbesondere von 5 bis 20 Gew.-%, bezogen auf die Gesamtmasse der thermisch expandierbaren Zubereitung enthalten.

Besonders bevorzugt wird das (Meth)acrylat-basierten Polymer in Form einer wässrigen Emulsion in die Zubereitung eingebracht.

Als weitere erfindungswesentliche Komponente enthalten die erfindungsgemäßen thermisch expandierbaren Zubereitungen ein physikalisches Treibmittel. Als physikalische Treibmittel werden vorzugsweise expandierbare Kunststoffmikrohohlkugeln insbesondere auf der Basis von Polyvinylidenchlorid-copolymeren oder Acrylnitril/(Meth)acrylat-Copolymeren eingesetzt. Diese sind beispielsweise unter den Namen "Dualite®" beziehungsweise "Expancel®" von den Firmen Pierce & Stevens beziehungsweise Akzo Nobel im Handel erhältlich.

Besonders bevorzugt enthält die thermisch expandierbaren Zubereitungen ein physikalisches Treibmittel, welches bereits unterhalb von 100 °C zu expandieren anfängt, insbesondere unterhalb von 85 °C, besonders bevorzugt in einem Temperaturbereich von 50 bis 100°C, insbesondere von 50 bis 85 °C zu expandieren anfängt.

Es hat sich als besonders vorteilhaft erwiesen, wenn die erfindungsgemäßen thermisch expandierbaren Zubereitungen das mindestens eine physikalische Treibmittel in einer Menge von 0,05 bis 5 Gew.-%, insbesondere von 0,1 bis 1 Gew.-%, bezogen auf die Gesamtmasse der thermisch expandierbaren Zubereitung enthalten.

In einer bevorzugten Ausführungsform ist die thermisch expandierbare Zubereitung im Wesentlichen frei von ADCA (Azodicarbonamid) und/oder OBSH (4,4'-Oxybis(benzolsulfonylhydrazid)), insbesondere im Wesentlichen frei von exothermen chemischen Treibmitteln, vorzugsweise im Wesentlichen frei von chemischen Treibmitteln. Thermisch expandierbare Zubereitungen sind erfindungsgemäß "im Wesentlichen frei von", wenn sie weniger als 1 Gew.-%, vorzugsweise weniger als 0,5 Gew.-%, ganz besonders bevorzugt weniger als 0,1 Gew.-% eines der Komponent enthalten, insbesondere die Komponente gar nicht enthalten.

Als einen weiteren erfindungswesentlichen Bestandteil enthalten die thermisch expandierbaren Zusammensetzungen mindestens zwei Polysaccharide. Unter einem Polysaccharid sind vorzugsweise Moleküle zu verstehen, bei denen mindestens 10 Monosaccharidmoleküle über eine glycosidische Bindung verbunden sind. Bevorzugte Beispiele umfassen Cellulose, Stärke (Amylose und Amylopektin), Pektin, Chitin, Chitosan, Glycogen, Callose und deren Derivate. Besonders bevorzugt sind mindestens zwei Cellulosen oder mindestens zwei Stärken oder Mischungen daraus, insbesondere mindestens zwei Stärken in der thermisch expandierbaren Zusammensetzung enthalten. Bei den mindestens zwei Polysacchariden handelt es sich um mindestens zwei verschiedene Polysaccharide.

Der Einsatz von den Polysacchariden, insbesondere von Cellulosen und/oder Stärken, vor allem von zwei Stärken, hat einen besonders vorteilhaften Effekt auf die Lagerstabilität und vor allem auf das Blasenbildungsverhalten, wobei aber die Polysaccharide gleichzeitig das Expansionsverhalten nicht negativ beeinflusst, sondern sogar eher verbessert. So konnte durch den Einsatz von Polysacchariden, insbesondere Stärken in Kombination mit physikalischen Treibmittel sowohl die Eigenschaften der Zubereitung selbst, z.B. hinsichtlich der Lagersabilität und Blasenbildung bei der Expansion, als auch die Eigenschaften des Schaums, z.B. hinsichtlich Haftung und Feuchtigkeitsaufnahme, verbessert werden.

Bei den erfindungsgemäß bevorzugten Cellulosen können grundsätzlich Cellulosederivate in allen erhältlichen Modifizierungen, Molekulargewichten, Verzweigungsgraden und Substitutionsmustern eingesetzt werden. Bevorzugte Beispiele sind Methylcellulose, Hydroxyethylcellulose, Hydroxyethylmethylcellulose, Hydroxypropylcellulose, Hydroxypropylmethylcellulose, Hydroxypropylethylcellulose, Carboxymethylcellulose und Cetylhydroxyethylcellulose.

Besonders bevorzugt wird die Cellulose in Form von einem Cellulosepulver eingesetzt, wie Holzmehl. Besonders bevorzugt weisen die Cellulosepulver eine Korn-/Fasergrössenverteilung (Angaben jeweils in Gew.-%) auf von > 30 %, insbesondere > 60 %, bevorzugt > 90 % kleiner als 32 $\mu$m, und bevorzugt zusätzlich > 70 %, insbesondere > 90 %, bevorzugt > 100 % kleiner 100 $\mu$m (Siebrückstand auf Alpine-Luftstrahlsieb nach DIN EN ISO 8130-1) auf.

Die im Rahmen der Erfindung bevorzugten Stärken bestehen generell im Wesentlichen aus Amylose und Amylopektin in wechselnden Mengenverhältnissen. Bevorzugt haben die Stärken einen Gehalt an Amylopektin von > 50 Gew.-%, insbesondere > 80 Gew.-%, vorzugsweise > 95 Gew.-%, besonders bevorzugt > 99 Gew.-% bezogen auf das Gesamtgewicht der jeweiligen Stärke.

Die Stärken können native, anionisch und/oder kationisch modifiziert, verestert, verethert und/oder vernetzt sein. Bevorzugt werden native und/oder anionische Stärken. Besonders bevorzugt sind Stärken auf Basis von Kartoffelstärke, Maisstärke, Wachsmaisstärke, Reisstärke, Weizenstärke (allgemein Getreidestärken) oder Tapiokastärke (Maniok). Im Rahmen der Versuche wurden besonders gute Ergebnisse mit Stärken auf Basis von Kartoffelstärke erzielt, weshalb Stärken auf Basis von Kartoffelstärke, insbesondere native Kartoffelstärke und/oder chemisch modifizierte Kartoffelstäke, wie phosphatierte hydoxypropyl-modifizierte Kartoffelstärke, besonders bevorzugt sind.

Geeignete Stärken sind prinzipiell alle aus natürlichen Vorkommen generierbare Stärken. Geeignete Stärkebeispiele sind Stärke aus Kartoffeln, Tapioka, Maniok, Reis, Weizen oder Mais. Weitere Beispiele sind Stärken aus Maranta, Batata, Roggen, Gerste, Hirse, Hafer, Sorghum, Stärken aus Früchten wie Kastanien, Eicheln, Bohnen, Erbsen u.a. Hülsenfrüchten, Bananen, sowie Pflanzenmark zum Beispiel der Sagopalme.

Neben Stärken pflanzlichen Ursprungs können auch Stärken verwendet werden, die chemisch modifiziert sind, fermentativ gewonnen wurden, rekombinanten Ursprungs sind oder durch Biotransformation beziehungsweise Biokatalyse hergestellt wurden. Unter "chemisch modifizierten Stärken" versteht die Erfindung solche Stärken, bei denen auf chemischem Wege die Eigenschaften im Vergleich zu den natürlichen Eigenschaften verändert wurden. Dies wird im Wesentlichen durch polymeranaloge Umsetzungen erreicht, bei denen Stärke mit mono-, bi- oder polyfunktionellen Reagenzien beziehungsweise Oxidationsmitteln behandelt wird. Dabei werden vorzugsweise die Hydroxygruppen der Polyglucane der Stärke durch Veretherung, Veresterung oder selektive Oxidation umgewandelt oder die Modifizierung beruht auf einer radikalisch initiierten Pfropfcopolymerisation von copolymerisierbaren ungesättigten Monomeren auf das Stärkerückgrat.

Zu besonderen chemisch modifizierten Stärken gehören unter anderem Stärkeester, wie Xanthogenate, Acetate, Phosphate, Sulfate, Nitrate, Stärkeether, wie zum Beispiel nichtionische, anionische oder kationische Stärkeether, oxidierte Stärken, wie etwa Dialdehydstärke, Carboxystärke, Persulfat-abgebaute Stärken und ähnliche Substanzen.

Bevorzugte chemische Modifikationen umfassen die Phosphatierung, Hydroxypropylierung, Acetylierung und Ethylierung.

"Durch Biotransformation hergestellte Stärken" bedeutet im Rahmen der Erfindung, dass Stärken, Amylose, Amylopektin oder Polyglucane durch katalytische Reaktion von monomeren Grundbausteinen, im allgemeinen oligomeren Sacchariden, insbesondere Mono- und Disacchariden, hergestellt werden, indem ein Biokatalysator (auch: Enzym) unter speziellen Bedingungen verwendet wird. Beispiele für Stärken aus biokatalytischen Prozessen sind neben anderen Polyglucan und modifizierte Polyglucane, Polyfructan und modifizierte Polyfructane.

Prinzipiell kann für die Zwecke der chemischen Modifikation jede anionische oder kationische Gruppe, die sich zur Modifikation von Stärke eignet, eingesetzt werden.

Beispiele für anionische Gruppen sind Carboxylgruppen, Phosphatgruppen, Sulfatgruppen, Boratgruppen, Phosphonatgruppen und Sulfonatgruppen.

Davon sind besonders bevorzugt Phosphat-, Borat- und Sulfatgruppen, von den Sulfatgruppen insbesondere diejenigen aus der Umsetzung mit Schwefelsäure., besonders bevorzugt sind Phosphatgruppen.

Beispiele für kationische Gruppen sind tertiäre Aminogruppen, quartäre Ammoniumgruppen, tertiäre Phosphingruppen, quartäre Phosphoniumgruppen, Iminogrup- pen, Sulfidgruppen und Sulfoniumgruppen.

Davon sind besonders bevorzugt Amino- und Ammoniumgruppen.

Diese Gruppen können frei oder in Form ihrer Salze in dem Stärkemolekül vorliegen. Ein Stärkemolekül kann auch mit verschiedenen anionischen bzw. kationischen Gruppen substituiert sein, die zudem über verschiedene Substituenten - einführende Verbindungen und über unterschiedliche Reaktionen eingeführt sein können.

Verfahren und Verbindungen zur Einführung dieser Gruppen sind dem Fachmann geläufig und allgemein bekannt.

Im Fall von Phosphat, Sulfat oder Borat können die korrespondierenden Stärkederivate durch die Umsetzung der freien anorganischen Säuren, z. B. im Fall von Phosphat Phosphorsäure oder seinen Estern, erhalten werden.

Carboxylgruppen können z. B. über nucleophile Substitution oder einer zur Michael- Addition verwandten Variante eingeführt werden. Ein Beispiel für den ersten Reaktionstyp ist die Umsetzung von Stärke mit Chloressigsäure, ein Beispiel für den zweiten Reaktionstyp ist die Addition von Maleinsäureanhydrid an das Stärkerückgrat. Zu nennen sind u.a. auch die Umsetzung mit Hydroxycarbonsäure in einer Synthese analog zur Williamsonschen-Ethersynthese. Auf diese Weise können z. B. durch den Einsatz von Äpfelsäure, Zitronensäure oder Weinsäure mit einer Veretherungsreaktion gleichzeitig mehr als nur eine Carboxylgruppe an eine Hydroxylgruppe der Stärke angekoppelt werden.

Darüber hinaus können Verbindungen, die z. B. mindestens zwei Carboxylgruppen enthalten, wie Dicarbonsäuren etc., über Veresterung einer Carboxylgruppe mit einer Hydroxylgruppe an das Stärkerückgrat gekoppelt werden.

Kationische Stärkederivate können wie folgt erhalten werden: Für die Ankopplung von Aminofunktionen können u.a. alle Derivate verwendet werden, die chemisch derart aktiviert sind, dass sie durch das Stärkerückgrat z. B. durch eine nucleophile Substitution, durch eine Addition oder durch eine Kondensation zur Reaktion gebracht werden. Als Beispiel für den ersten Reaktionstyp sind z. B. Trimethylammoniumchlorid oder 2-Diethylaminoethylchlorid zu nennen. Die ionische Struktur wird dabei entweder durch die direkte Umsetzung mit dem korrespondieren Salz oder durch die nachträgliche Addition von Salzsäure erhalten. Als Additionsprodukte können dabei Reaktionen mit Epoxidgruppen in der Seitengruppe des Stickstoffs enthaltenden Reagenz gesehen werden. Als Beispiel sei 2,3-(Epoxypropyl)diethylammoniumchlorid oder dessen Hydrochlorid oder 2,3-(Epoxypropyl)trimethyiammoniumchlorid genannt. Zur Ankopplung durch Kondensation kommt es, wenn bei der Reaktion zwischen Stärke und des die ionischen Gruppen einführenden Reagenzes zur Abspaltung von Kondensationsprodukten wie etwa Wasser oder Methanol und ähnlichem kommt.

Zusätzlich können in der Stärke neben den anionischen bzw. kationischen Gruppen noch andere funktionelle Gruppen als Substituenten vorliegen.

Beispiele hierfür sind nichtionische Substituenten, die z. B. Ether- oder Esterfunktionen ausbilden können.

Im Fall der Anbindung weiterer Substituenten an das Stärkerückgrat über Etherverknüpfungen kommen z. B. folgende Möglichkeiten in Frage: Alkyl, wie Methyl, Ethyl, Propyl, Butyl, Alkenyl, Hydroxyalkyl, z. B. Hydroxyethyl, Hydroxypropyl. Für die Ankopplung über Estergruppen steht die Umsetzung mit Essigsäureanhydrid an oberster Stelle durch die Stärkeacetatderivate entstehen. Weitere Substituenten können durch Reaktion mit Propionsäure, Buttersäure und den höheren Fettsäuren, insbesondere aus dem natürlichen Stoffwechsel, wie etwa Laurylsäure, Ölsäure, etc., eingebracht werden. Besonders bevorzugt ist eine Etherverknüpfung, insbesondere mit Hydroxyalkyl, bevorzugt Hydroxypropyl.

Besonders bevorzugt sind Polysaccharide, insbesondere Stärken und/oder Cellulosen, bevorzugt Stärken mit einer Gelierungstemperatur von mindestens 40°C, bevorzugt von mindestens 50°C. Insbesondere weisen die Stärken eine Gelierungstemperatur von 40 bis 200°C, bevorzugt 50 bis 150 °C auf. Entsprechende Stärken haben einen positiven Effekt auf die Lagerstabilität mit einer verbesserten Expansion.

Insbesondere die Verwendung von mehr als einem Polysaccharid, bevorzugt mehr als einer Stärke und/oder mehr als einer Cellulose, insbesondere mehr als einer Stärke ist vorteilhaft. Hierbei haben die Stärken bevorzugt verschiedene Gelierungstemperaturen, wobei das Polysacharid 1 bzw. die Stärke 1 im Bereich 50-100 °C eine Gelierungstemperatur aufweist und das zweite Polysaccharid 2 bzw. die mindestens zweite, vorzugsweise modifizierte Stärke 2 eine Gelierungstemperatur im Bereich 80 - 150 °C aufweist.

Die Gelierung beschreibt das Quellen des Polysaccharids. Zur Bestimmung der Gelierungs-Nerkleisterungstemperatur, wird der Übergang des Polysaccharids bzw. der Stärke bei der Temperatur der Quellung zugrunde gelegt. Die Gelierungstemperatur kann mittels Dynamischer Differenzkalorimetrie DSC oder auch mittels Mikroskopie bei polarisiertem Licht und Beobachtung der beginnenden Quellung bestimmt werden, vorzugsweise mittels DSC.

In einer bevorzugten Ausführungsform enthalten die thermisch expandierbaren Zusammensetzungen eine Kombination aus einer kaltlöslichen und einer warmlöslichen Stärke. In einer bevorzugten Ausführungsform ist mindestens eine kalt-schwellende Stärke und mindestens eine hydroxylierte, insbesondere hydroxypropylierte Stärke in den thermisch expandierbaren Zusammensetzungen enthalten.

In verschiedenen Ausführungsformen enthalten die thermisch expandierbaren Zusammensetzungen die mindestens zwei Polysaccharide, bevorzugt die mindestens zwei Stärken oder mindestens zwei Cellulosen oder Mischungen daraus, insbesondere die mindestens zwei Stärken, in einer Menge von 0,1 bis 20 Gew.-%, insbesondere 0,5 bis 15 Gew.-%, bevorzugt 1 bis 10 Gew.-%, besonders bevorzugt 2 bis 5 Gew.-%, bezogen auf die Gesamtzusammensetzung. Dabei beziehen sich die Gew.-%, soweit nicht anders beschrieben, auf die Gesamtzusammensetzung vor der Expansion.

Dabei kann insbesondere auch auf kommerziell erhältliche Stärken und Stärkederivate zurückgegriffen werden: z. B. von Avebe, Cerestar, National Starch, Purac und Südstärke.

Des Weiteren enthalten die erfindungsgemäßen thermisch expandierbaren Zubereitungen 1 bis 30 Gew.-% Wasser, bezogen auf die Gesamtmasse der thermisch expandierbaren Zubereitung,. Es hat sich als besonders vorteilhaft erwiesen, wenn die erfindungsgemäßen thermisch expandierbaren Zubereitungen Wasser in einer Menge von 1 bis 20 Gew.-%, vorzugsweise 5 bis 15 Gew.-%, bezogen auf die Gesamtmasse der thermisch expandierbaren Zubereitung, enthalten.

Besonders bevorzugt enthalten die Zubereitung zusätzlich mindestens ein Graphit, insbesondere ein Graphit mit einer Partikelgrößen von 20 - 200 $\mu$m. Graphit, insbesondere Graphit mit der beschriebenen großen Partikelgröße wirkt sich besonders vorteilhaft auf die Schalldämpfungseigenschaften aus. Dabei war es überraschend, dass Graphit mit der beschriebenen großen Partikelgröße überhaupt in die wässrigen Systeme eingearbeitet werden konnte, ohne dass die Lagerstabilität und das Expansionsverhalten negativ beeinflusst wird. Dies ist vor allem dem Einsatz der mindestens zwei Stärken zu verdanken. Vorteilhafterweise enthalten die erfindungsgemäßen thermisch expandierbaren Zubereitungen Graphite in einer Menge von 5 bis 30 Gew.-%, insbesondere von 10 bis 25 Gew.-%, bezogen auf die Gesamtmasse der thermisch expandierbaren Zubereitung enthalten.

Neben den genannten Bestandteilen können die thermisch expandierbaren Massen noch weitere übliche Komponenten, wie beispielsweise Farbstoffe, Füllstoffe und Antioxidantien enthalten.

Als Füllstoffe kommen beispielsweise die diversen gemahlenen oder gefäll¬ten Kreiden, Calcium-Magnesiumcarbonate, Talkum, Schwerspat, Kieselsäuren oder Silica sowie insbe¬sondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff.

Die Füllstoffe werden vorzugsweise in einer Menge von 0 bis 70 Gew.-%, insbesondere von 30 bis 60 Gew.-%, jeweils bezogen auf die Masse der gesamten thermisch expandierbaren Zubereitung eingesetzt.

Farbgebende Komponenten, insbesondere schwarze Farbstoffe auf Basis von Rußen, sind in den erfindungsgemäßen thermisch expandierbaren Zubereitungen vorzugsweise in einer Menge von 0 bis 8 Gew.-%, insbesondere von 0,1 bis 4 Gew.-%, jeweils bezogen auf die Masse der gesamten thermisch expandierbaren Zubereitung enthalten.

Als Antioxidantien oder Stabilisatoren können beispielsweise sterisch gehinderte Phenole und/oder sterisch gehinderte Thioether und/oder sterisch gehinderte aromatische Amine eingesetzt werden, wie beispielsweise Bis-(3,3-bis-(4'-hydroxy-3-tert. butylphenyl) butansäure)-glykolester.

Antioxidantien oder Stabilisatoren sind in den erfindungsgemäßen thermisch expandierbaren Zubereitungen vorzugsweise in einer Menge von 0 bis 2 Gew.-%, insbesondere von 0,1 bis 0,5 Gew.-%, jeweils bezogen auf die Masse der gesamten thermisch expandierbaren Zubereitung enthalten.

Die erfindungsgemäßen thermisch expandierbaren Zubereitungen können durch Mischung der ausgewählten Komponenten in einem beliebigen, geeigneten Mischer, wie beispielsweise einem Dispersionsmischer, einem Planetenmischen, einem Doppelschneckenmischer, einem kontinuierlichen Mischer oder einem Extruder, insbesondere einem Doppelschneckenextruder, hergestellt werden.

Obwohl es vorteilhaft sein kann, die Komponenten etwas zu erhitzen, um die Erreichung einer homogenen, einheitlichen Masse zu erleichtern, muss dafür Sorge getragen werden, dass keine Temperaturen erreicht werden, die eine Aktivierung des ggf. vorhandenen thermisch aktivierbaren Härters und/oder des Treibmittels bewirken.

Die Lagerung der erfindungsgemäßen Zubereitungen bis zur Anwendung erfolgt vorzugsweise in Container / Tankzügen / Düsenkartuschen oder Fässern, wie beispielsweise Hobbocks.

Die erfindungsgemäßen Zusammensetzungen zeichnen sich vorzugsweise dadurch aus, dass sie reversibel (ohne eine nennenswerte Änderung des Temperatur-abhängigen Viskositätsverhaltens) auf Temperaturen bis zu 70°C erwärmt werden können und folglich mehrfach innerhalb dieses Temperaturbereichs mittels beheizter Pumpen transportiert und/oder umgeformt werden können.

Bevorzugt sind die erfindungsgemäßen Zubereitungen zudem bei Applikationstemperaturen pumpbar. Besonders bevorzugt sind Zubereitungen, die "bei Applikationstemperaturen pumpbar" sind, in dem Sinne, dass sie bei 60°C und einem Pumpendruck von 6bar einen Fluss von mindestens 100g/min, vorzugsweise von 150g/min bis 4500g/min, ganz bevorzugt von 250g/min bis 3000g/min aufweisen, wenn sie aus einer vollständig gefüllten, handelsüblichen Aluminiumdüsenkartusche mit einem Fassungsvolumen von 310ml und einem Innendurchmesser von 46mm, deren Austrittsöffnung mit Hilfe eines Kartuschenanstechers mit einem Außendurchmesser von 9mm geöffnet wurde, ohne Aufsatz einer Düse bei einer Temperatur von 60°C (nach 45Minuten Vortemperierung) und einem Druck von 6bar ausgebracht werden. Der Fluss gibt die Masse an Zubereitung an, die innerhalb von 1 Minute ausgebracht werden kann und wird dementsprechend in g/min angegeben.

Zum Zeitpunkt der Anwendung wird die erfindungsgemäße Zubereitung mit herkömmlichen, beheizten Pumpen aus dem Lagerbehältnis zum Ort der Anwendung transportiert und dort appliziert. Ein Auftrag bis zu einer Schichtdicke von 5cm ist dabei problemlos möglich, so dass auch größere Hohlräume, beispielsweise Rohre mit einem entsprechenden Innendurchmesser, ohne weiteres gefüllt werden können.

Die Expansion der applizierten thermisch expandierbaren Zubereitung erfolgt durch Erhitzung, wobei die Zubereitung für eine bestimmte Zeit auf eine bestimmte Temperatur erhitzt wird, die ausreichend ist, um die Aktivierung des Treibmittels sowie des ggf. vorhandenen Härter-Systems zu bewirken.

In Abhängigkeit von der Zusammensetzung der Zubereitung und den Bedingungen der Fertigungslinie liegen derartige Temperaturen üblicherweise im Bereich von 100°C bis 240°C, vorzugsweise 140°C bis 200°C, mit einer Verweilzeit von 10 bis 90 Minuten, vorzugsweise von 15 bis 60 Minuten.

Die Art der Wärmequelle spielt prinzipiell keine Rolle, so kann die Wärmezufuhr beispielsweise durch ein Heißluftgebläse, durch Bestrahlung mit Mikrowellen, durch magnetische Induktion oder auch durch Heizzangen erfolgen. Im Bereich des Fahrzeugbaus sowie in Technologiefeldern mit verwandten Herstellprozessen ist es besonders vorteilhaft, wenn die Expansion der erfindungsgemäßen Zubereitungen während der Passage des Fahrzeugs durch den Ofen zur Aushärtung der kathodischen Tauchlackierung oder zum Einbrennen der Pulverlackbeschichtungen erfolgt, so dass auf einen separaten Erhitzungsschritt verzichtet werden kann.

Die erfindungsgemäßen Zubereitung weisen nach der Expansion und ggf. der thermischen Härung einen mit einer Oberst-Methode gemessenen Verlustfaktor CLF (Composite Loss Faktor) bei einem Auftrag von 3 kg/m$^2$ auf, der bei einer Temperatur im Bereich von -5 °C bis +40 °C mindestens 0,1, vorzugsweise mindestens 0,2, insbesondere 0,25 beträgt, was das gute akustische Dämpfungsverhalten zum Ausdruck bringt. "Bei einer Temperatur im Bereich von -5 °C bis +40 °C" bedeutet, dass der genannte Mindestwert für CLF bei irgendeiner Temperatur im genannten Bereich erreicht wird. Der Verlustfaktor CLF kann mit einer "Oberst Analyse" in Anlehnung an DIN EN ISO 6721 bestimmt werden: Ein zweiter Gegenstand der vorliegenden Erfindung ist ein Verfahren zum Schalldämpfen von Bauteilen mit insbesondere dünnwandigen Strukturen, insbesondere von rohrförmigen Strukturen. In solchen Verfahren kann eine erfindungsgemäße thermisch expandierbare Zubereitung bei einer Temperatur unterhalb von 120°C auf die Oberfläche der Struktur oder des Bauteils auf- oder eingebracht werden, vorzugsweise pumpbar mit einem Pumpendruck von weniger als 200bar, und diese Zubereitung zu einem späteren Zeitpunkt vorzugsweise bei Temperaturen oberhalb von 130°C ausgehärtet werden. Das Aushärten führt dazu, dass die thermisch expandierbare Zubereitung expandiert und so das Bauteil versteift/den Hohlraum abdichtet.

Ein Aufbringen der Zubereitungen in einem Temperaturbereich von 30°C bis 80°C ist dabei erfindungsgemäß besonders bevorzugt.

Weiterhin besonders bevorzugt ist eine Applikation bei einem Applikationsdruck von 6bar bis 180bar.

Die eigentliche Härtung findet erfindungsgemäß zu einem "späteren Zeitpunkt" statt. So ist es beispielsweise erfindungsgemäß denkbar, dass die Bauteile mit den pumpbaren, thermisch expandierbaren Zubereitungen beschichtet/-gefüllt und anschließend zwischengelagert werden. Dabei kann die Zwischenlagerung beispielsweise auch den Transport zu einem anderen Werk umfassen. Eine derartige Zwischenlagerung kann bis zu einigen Wochen dauern.

In einer anderen Ausführungsform ist es aber auch denkbar, dass die Bauteile kurz nach der Beschichtung/Befüllung mit der pumpbaren, thermisch expandierbaren Zubereitung einem Härtungsschritt unterzogen werden. Dies kann unmittelbar oder bei einer Fließbandproduktion nach Erreichen einer der folgenden Stationen erfolgen. Es ist im Rahmen dieser Ausführungsform erfindungsgemäß besonders bevorzugt, wenn der Aushärtungsschritt innerhalb von 24h, insbesondere innerhalb von 3h, nach dem Auftrag der erfindungsgemäßen Zubereitungen erfolgt.

Die erfindungsgemäßen pumpbaren, thermisch aktivierbaren Zubereitungen, bzw. die daraus resultierenden Schäume können in allen Produkten zum Einsatz kommen, um eine Schalldämpfung zu erhalten. Dies sind neben den Fahrzeugen beispielsweise Flugzeuge, Haushaltsgeräte, Möbel, Gebäude, Wände, Abtrennungen, oder Boote.

Im Bereich des Fahrzeugbaus hat sich der Einsatz der erfindungsgemäßen Zubereitungen insbesondere im Bereich der Konstruktion des Fahrersicherheitskäfigs beziehungsweise der Fahrgastzelle als vorteilhaft erwiesen, da dadurch der Konstruktion eine enorme Stabilität bei gleichzeitig geringem Gewicht verliehen werden kann. Insbesondere bei der Konstruktion von Rennwagen aller Klassen (Formel I, Tourenwagen, Rallye-Fahrzeugen etc.) kann die erfindungsgemäße Zubereitung vorteilhaft eingesetzt werden.

Ein weiterer Gegenstand der vorliegenden Erfindung ist ein Bauteil, optional mit dünnwandiger Struktur, das mittels einer erfindungsgemäßen Zubereitung schallgedämpft wurde.

Alle im Zusammenhang mit den Zubereitungen der Erfindungen offenbarten Ausführungsformen sind ebenso auf die Verfahren und Verwendungen übertragbar und umgekehrt.

**Beispiele:**

Es wurden die folgende thermisch expandierbare Zubereitung hergestellt.

Die Mengenangaben verstehen sich, sofern nichts anderes vermerkt ist, in Gewichtsprozent.

| Komponente | Beispiel 1 | Beispiel 2 | Beispiel 3 | Beispiel 4 |
|---|---|---|---|---|
| Arcyl-basiertes Bindemittelsystem 1 (~51% Feststoff in Wasser) | 24,3 | 13,74 | 11,633 | 13,74 |
| Arcyl-basiertes Bindemittelsystem 2 (~50% Feststoff in Wasser; Tg 0°C) | 0 | 11,06 | 0 | 0 |
| Arcyl-basiertes Bindemittelsystem 3 (~51% Feststoff in Wasser; Tg 0°C) | 0 | 0 | 0 | 11,06 |
| Arcyl-basiertes Bindemittelsystem 4 (~52% Feststoff in Wasser; Tg 15°C) | 0 | 0 | 12,167 | 0 |
| Wasser | 2,0 | 6,07 | 5,218 | 6,07 |
| Dispergiermittel | 0,4 | 0,8 | 1,4 | 0,8 |
| Surfactant | 0,316 | 0,316 | 0,316 | 0,316 |
| Aminoalkohol | 0,3 | 0,3 | 0,3 | 0,3 |
| Hydroxyproylierte Kartoffelstärke | 2,3 | 2,3 | 2,3 | 2,3 |
| Kalt schwellende Kartoffelstärke | 0,364 | 0,364 | 0,364 | 0,364 |
| Russ | 20,0 | 16,5 | 18,5 | 16,5 |
| Microhohlkugeln (Starttemperatur für die Expansion 80°C) | 0,208 | 0,208 | 0,265 | 0,208 |
| Calciumcarbonat | 42,962 | 43,752 | 43,807 | 44,262 |
| Bakterizid | 0,15 | 0,15 | 0,15 | 0,15 |
| Diethylenglykol | 1,5 | 1,5 | 0,99 | 0,99 |
| Glycerin | 0 | 0,99 | 0,99 | 0,99 |
| Rheologiemittel | 0,45 | 0,45 | 0,45 | 0,45 |
| Wachs | 0 | 1,5 | 1,15 | 1,5 |

Zur Herstellung der erfindungsgemäßen thermisch expandierbaren Zubereitungen wurden die enthaltenen Komponenten im Planentenmischer bevorzugt unter Kühlung auf unter 20°C zu einer homogenen Zusammensetzung verarbeitet.

Bestimmung der Expansion:

Zur Bestimmung der Expansion wurde die Zusammensetzung aufgetragen und in einen Umluftofen eingeführt, der auf die in nachfolgend genannten Temperaturen erhitzt (Aufheizzeit ca. 7 bis 10 min) war. Die Probe wurde dann für 30 min bei dieser Temperatur belassen.

Das Ausmaß der Expansion [%] wurde mittels der Wasserverdrängungsmethode nach der Formel Expansion

$$Expansion = \frac{(m2 - m1)}{m1} \times 100$$

m1 = Masse des Probe im Originalzustand in deionisiertem Wasser
m2 = Masse der Probe nach Expansion in deionisiertem Wasser
ermittelt.

| Temperatur [°C] | Expansion von Beispiel 1 |
|---|---|
| 125 °C | 81 % |
| 145 °C | 80 % |
| 165 °C | 82 % |

(fortgesetzt)

| Temperatur [°C] | Expansion von Beispiel 1 |
|---|---|
| 205 °C | 84 % |

Die Beispielformulierung zeigt ein gleichmäßiges Aufblähen über einen weiten Temperaturbereich. Zusätzlich sind die expandierten Proben bei allen Temperaturen blasenfrei. Des Weiteren zeigen die Proben hervorragende Schall-Dämpfungseigenschaften.

**Patentansprüche**

1. Thermisch expandierbare Zubereitung enthaltend

    (a) mindestens ein Bindemittel;
    (b) mindestens ein physikalisches Treibmittel;
    (c) mindestens zwei Polysaccharide und
    (d) Wasser,

    wobei als Bindemittel mindestens ein (Meth)acrylat-basiertes Polymer enthalten ist und das Wasser in einer Menge von 1 bis 30 Gew-%, bezogen auf die Gesamtmasse der thermisch expandierbaren Zubereitung, enthalten ist.

2. Thermisch expandierbare Zubereitung nach Anspruch 1, **dadurch gekennzeichnet, dass** das dass als Bindemittel mindestens ein (Meth)acrylat-basiertes Polymer in einer Menge von 3 bis 30 Gew.-%, bezogen auf die Gesamtmasse der thermisch expandierbaren Zubereitung, enthalten ist.

3. Thermisch expandierbare Zubereitung nach Anspruch 2, **dadurch gekennzeichnet, dass** als Bindemittel mindestens ein (Meth)acrylat-basiertes Polymer in einer Menge von 5 bis 20 Gew.-%, bezogen auf die Gesamtmasse der thermisch expandierbaren Zubereitung, enthalten ist.

4. Thermisch expandierbare Zubereitung nach einem der Ansprüche 1 bis 3, **dadurch gekennzeichnet, dass** als physikalisches Treibmittel expandierbare Kunststoffmikrohohlkugeln insbesondere auf der Basis von Polyvinylidenchloridcopolymeren oder Acrylnitril/(Meth)acrylat-Copolymeren eingesetzt werden.

5. Thermisch expandierbare Zubereitung nach einem der Ansprüche 1 bis 4, **dadurch gekennzeichnet, dass** das mindestens eine physikalische Treibmittel in einer Menge von 0,05 bis 5 Gew.-%, insbesondere von 0,1 bis 1 Gew.-%, bezogen auf die Gesamtmasse der thermisch expandierbaren Zubereitung, enthalten ist.

6. Thermisch expandierbare Zubereitung nach einem der Ansprüche 1 bis 5, **dadurch gekennzeichnet, dass** als Polysaccharide mindestens zwei Cellulosen oder mindestens zwei Stärken oder Mischungen daraus enthalten sind, insbesondere mindestens zwei Stärken.

7. Thermisch expandierbare Zubereitung nach einem der Ansprüche 1 bis 6, **dadurch gekennzeichnet, dass** die mindestens zwei Polysaccharide in einer Menge von 0,1 bis 20 Gew.-%, insbesondere 0,5 bis 15 Gew.-%, bevorzugt 1 bis 10 Gew.-%, besonders bevorzugt 2 bis 5 Gew.-%, bezogen auf die Gesamtzusammensetzung, enthalten sind.

8. Thermisch expandierbare Zubereitung nach einem der Ansprüche 1 bis 7, **dadurch gekennzeichnet, dass** das Wasser in einer Menge von 1 bis 20 Gew.-%, vorzugsweise 5 bis 15 Gew.-%, bezogen auf die Gesamtmasse der thermisch expandierbaren Zubereitung, enthalten ist.

9. Thermisch expandierbare Zubereitung nach einem der Ansprüche 1 bis 8, **dadurch gekennzeichnet, dass** die Zubereitung zusätzlich mindestens ein Graphit, insbesondere ein Graphit mit einer Partikelgrößen von 20 - 200 $\mu$m, enthält.

10. Thermisch expandierbare Zubereitung nach einem der Ansprüche 1 bis 9, **dadurch gekennzeichnet, dass** sie weiterhin Füllstoffe, Antioxidantien, Aktivatoren und/oder Farbstoffe enthält.

11. Thermisch expandierbare Zubereitung nach einem der Ansprüche 1 bis 10, **dadurch gekennzeichnet, dass** die Zubereitung pumpbar ist.

12. Verfahren zum Schalldämpfen von Bauteilen mit insbesondere dünnwandigen Strukturen, **dadurch gekennzeichnet, dass** eine thermisch expandierbare Zubereitung nach einem der Ansprüche 1 bis 11 verwendet wird.

13. Verwendung einer thermisch expandierbaren Zubereitung gemäß einem der Ansprüche 1 bis 11 zum Schalldämmen von Bauteilen.

14. Bauteil, optional mit dünnwandiger Struktur, das mit einer thermisch expandierbaren Zubereitung nach einem der Ansprüche 1 bis 11 durch Aushärtung schallgedämmt wurde.

**Claims**

1. A thermally expandable preparation, containing

   (a) at least one binder;
   (b) at least one physical blowing agent;
   (c) at least two polysaccharides and
   (d) water,

   wherein at least one (meth)acrylate-based polymer is contained as the binder and the water is contained in an amount of 1 to 30 wt.%, based on the total mass of the thermally expandable preparation.

2. The thermally expandable preparation according to claim 1,
   **characterized in that** the that at least one (meth)acrylate-based polymer is contained as the binder in an amount of 3 to 30 wt.%, based on the total mass of the thermally expandable preparation.

3. The thermally expandable preparation according to claim 2,
   **characterized in that** at least one (meth)acrylate-based polymer is contained as the binder in an amount of 5 to 20 wt.%, based on the total mass of the thermally expandable preparation.

4. The thermally expandable preparation according to one of claims 1 to 3,
   **characterized in that** expandable plastics hollow microspheres, in particular based on polyvinylidene chloride copolymers or acrylonitrile/(meth)acrylate copolymers, are used as the physical blowing agent.

5. The thermally expandable preparation according to one of claims 1 to 4,
   **characterized in that** the at least one physical blowing agent is contained in an amount of 0.05 to 5 wt.%, in particular 0.1 to 1 wt.%, based on the total mass of the thermally expandable preparation.

6. The thermally expandable preparation according to one of claims 1 to 5, **characterized in that** at least two celluloses or at least two starches or mixtures thereof are contained as polysaccharides, in particular at least two starches.

7. The thermally expandable preparation according to one of claims 1 to 6, **characterized in that** the at least two polysaccharides are contained in an amount of 0.1 to 20 wt.%, in particular 0.5 to 15 wt.%, preferably 1 to 10 wt.%, particularly preferably 2 to 5 wt.%, based on the total composition.

8. The thermally expandable preparation according to one of claims 1 to 7, **characterized in that** the water is contained in an amount of 1 to 20 wt.%, preferably 5 to 15 wt.%, based on the total mass of the thermally expandable preparation.

9. The thermally expandable preparation according to one of claims 1 to 8, **characterized in that** the preparation additionally contains at least one graphite, in particular a graphite having a particle size of 20 - 200 $\mu$m.

10. The thermally expandable preparation according to one of claims 1 to 9, **characterized in that** it also contains fillers, antioxidants, activators and/or dyes.

11. The thermally expandable preparation according to one of claims 1 to 10, **characterized in that** the preparation can be pumped.

**12.** A method for soundproofing structural components having in particular thin-walled structures, **characterized in that** a thermally expandable preparation according to one of claims 1 to 11 is used.

**13.** The use of a thermally expandable preparation according to one of claims 1 to 11 for soundproofing structural components.

**14.** A structural component, optionally having a thin-walled structure, soundproofed by means of curing using a thermally expandable preparation according to one of claims 1 to 11.


**Revendications**

**1.** Préparation expansible par voie thermique contenant

   (a) au moins un liant ;
   (b) au moins un agent gonflant physique ;
   (c) au moins deux polysaccharides et
   (d) de l'eau,

dans laquelle au moins un polymère à base de (méth)acrylate est contenu comme liant et l'eau est contenue en une quantité allant de 1 à 30 % en poids, par rapport à la masse totale de la préparation expansible par voie thermique.

**2.** Préparation expansible par voie thermique selon la revendication 1, **caractérisée en ce que** le que au moins un polymère à base de (méth)acrylate est contenu en tant que liant en une quantité allant de 3 à 30 % en poids, par rapport à la masse totale de la préparation expansible par voie thermique.

**3.** Préparation expansible par voie thermique selon la revendication 2, **caractérisée en ce qu'au** moins un polymère à base de (méth)acrylate est contenu en tant que liant en une quantité allant de 5 à 20 % en poids, par rapport à la masse totale de la préparation expansible par voie thermique.

**4.** Préparation expansible par voie thermique selon l'une des revendications 1 à 3, **caractérisée en ce que** sont utilisés comme agent gonflant physique des microsphères creuses en plastique expansibles, en particulier à base de copolymères de polychlorure de vinylidène ou de copolymères d'acrylonitrile/(méth)acrylate.

**5.** Préparation expansible par voie thermique selon l'une des revendications 1 à 4, **caractérisée en ce que** l'au moins un agent gonflant physique est contenu en une quantité allant de 0,05 à 5 % en poids, en particulier de 0,1 à 1 % en poids, par rapport à la masse totale de la préparation expansible par voie thermique.

**6.** Préparation expansible par voie thermique selon l'une des revendications 1 à 5, **caractérisée en ce qu'**au moins deux celluloses ou au moins deux amidons ou des mélanges de ceux-ci, en particulier au moins deux amidons, sont contenus en tant que polysaccharides.

**7.** Préparation expansible par voie thermique selon l'une des revendications 1 à 6, **caractérisée en ce que** les au moins deux polysaccharides sont contenus en une quantité allant de 0,1 à 20 % en poids, en particulier de 0,5 à 15 % en poids, de préférence de 1 à 10 % en poids, de manière particulièrement préférée de 2 à 5 % en poids, par rapport à la composition totale.

**8.** Préparation expansible par voie thermique selon l'une des revendications 1 à 7, **caractérisée en ce que** l'eau est contenue en une quantité allant de 1 à 20 % en poids, de préférence de 5 à 15 % en poids, par rapport à la masse totale de la préparation expansible par voie thermique.

**9.** Préparation expansible par voie thermique selon l'une des revendications 1 à 8, **caractérisée en ce que** la préparation contient en outre au moins un graphite, en particulier un graphite comportant une taille de particules allant de 20 à 200 $\mu$m.

**10.** Préparation expansible par voie thermique selon l'une des revendications 1 à 9, **caractérisée en ce qu'**elle contient en outre des charges, des antioxydants, des activateurs et/ou des colorants.

11. Préparation expansible par voie thermique selon l'une des revendications 1 à 10, **caractérisée en ce que** la préparation peut être pompée.

12. Procédé permettant d'insonoriser des éléments de construction comportant en particulier des structures à paroi mince, **caractérisé en ce qu'**une préparation expansible par voie thermique selon l'une des revendications 1 à 11 est utilisée.

13. Utilisation d'une préparation expansible par voie thermique selon l'une des revendications 1 à 11 pour l'isolation contre les sons d'éléments de construction.

14. Élément de construction, éventuellement comportant une structure à paroi mince, qui a été isolé contre les sons par durcissement avec une préparation expansible par voie thermique selon l'une des revendications 1 à 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004211934 A1
- EP 3147323 A1